# EUROPEAN PATENT SPECIFICATION

(11) **EP 2 898 413 B1**
(45) Date of publication and mention of the grant of the patent: **23.11.2016**
(21) Application number: 13771062.0
(22) Date of filing: 20.09.2013
(51) Int. Cl.: G06F 9/445, G06F 12/02, G06F 21/79, G06F 21/53

(54) **A SECURITY MODULE AND A METHOD FOR OPTIMUM MEMORY UTILIZATION**
EIN SICHERHEITSMODUL UND EIN VERFAHREN ZUR OPTIMALEN SPEICHERAUSNUTZUNG
UN MODULE DE SÉCURITÉ ET UN PROCÉDÉ D'UTILISATION OPTIMALE DE LA MÉMOIRE

(30) Priority: 24.09.2012 IN MM27642012
(43) Date of publication of application: 29.07.2015
(73) Proprietor: Giesecke & Devrient GmbH, 81677 München (DE)
(72) Inventor: SHINGNAPURKAR, Rushikesh, Pune 411 004 (IN); NAGAMPALLI, Udaikamal, Pune 411 004 (IN)
(86) International application number: PCT/EP2013/002847
(87) International publication number: WO 2014/044403

(56) References cited:
- EP-A1- 1 213 649
- EP-A1- 2 254 070
- WO-A1-00/10090
- KR-B1- 100 703 810
- US-A1- 2005 044 540
- US-A1- 2006 225 033
- US-A1- 2009 006 506
- US-A1- 2010 153 675
- US-A1- 2010 257 514
- US-A1- 2011 161 614
- US-B1- 6 457 019
- US-B1- 6 598 141

## Description

### FIELD OF THE INVENTION

The present invention generally relates to security modules. In particular, the present invention relates to security module and method for optimum memory utilization.

### BACKGROUND OF THE INVENTION

Generally, security modules are often used as trusted storage and data processing systems to store any valuable information and to implement a plurality of applications. In particular, the security modules are usually used as part of a larger access control or authorization architecture, which are becoming more commonplace. As a result of this, both the usage of security modules and the corresponding development environments have greatly expanded since their introduction. The usages of the security modules are increasing, in a multiplicity of applications, for example in mobile devices such as mobile telephones as SIM cards or USIM cards, as bank cards or electronic purses in electronic payment transactions, as health cards for holders of health insurance (patient card) and doctors (doctor card), as citizen cards, or as multiplication cards in which a plurality of the stated, as machine-machine modules for smart metering applications, or other, functionalities are implemented.

Most of the applications require a high-degree of memory management. Memory management is a crucial part to be considered while designing and implementing the security modules. Java smart card technology is one of the leading technologies in providing such a high degree of memory management with significant features such as implementation of multiple applications, portability, and compatibility with a platform independent programming language technology (Java), etc.

The Javacard architecture includes: a Javacard Virtual Machine which interprets the Javacard applications to be implemented by the Javacard system, a Javacard runtime Environment which interacts with the smart card reader and provides instructions or commands to Java card applications , an Application programming interface (API) for the Javacard platform which export a number of services to Java card applications, and a Javacard development Kit which is a suite of tools for designing implementations of the Javacard technology, and for developing applets based on the Java card API.

In the Javacard systems, the execution lifetime of the virtual machine is the lifetime of the card itself. Most of the information is stored on the smart card using Persistent memory technology which preserves the information in the Java card even when the power is removed.

In a typical Javacard security module, original program code (containing native and Java operating system elements and various applications) particularly resides in persistent memory (typically FLASH memory). These program codes may be programmed using Java or any other programming languages. Typically, in the Javacard platform, there are a number of codes that are used only once during the card lifetime (for example, code for production, codes for life cycle management, and applet management, etc). Such codes are called as One-Time code (OTC). If the OTC code is written using the Java card API and is present in a Javacard package, once the usage of the codes is finished, the codes can be deleted by the deletion mechanism mentioned in the Javacard specifications and the space gained can be reused for other personalization on the security module. This is called Garbage collection.

On a Javacard, once the operating system is loaded on the card, remaining free space is dedicated to a Java heap. Hence, all the objects (Java packages, Java codes, local variables in applets, Dedicated File, Application Dedicated file, Elementary File) are created on the heap. If these objects are deleted from the heap, the heap is resized according to size of the objects that were deleted. The same procedure is followed and the heap is resized during the creation of the objects. This model helps in effective memory utilization. This freeing of the heap, once the objects are deleted is possible because of Garbage Collection.

However, if the code is written in any language other than Java (for example, C, or assembly) it would not be possible to the delete it and reuse the gained space by using the above technique. Also, it should be noted that, the codes written in a language other than Java are not allowed to move/relocate (The code is position-dependent) and care should be taken so that the objects on the heap should not over-write the code written in the language other than Java. Hence, it not possible to achieve an effective memory utilization at this scenario.

A memory management unit controls access to memory portions for native code and JAVA code in EP 2 254 070 A1. US 2006/0225033 A1 proposes to create a single assembly comprising a managed code wrapper and the corresponding native code module. In US 2005/0044540 native code is used in an object structure close to the object structure of JAVA. According to US 6457019 objects are managed in a run-time environment on N-bit aligned addresses.

Based on the forgoing, there is a clear need for techniques that efficiently utilize the memory in the security module, if the security module contains the code which is written in any languages other than Java.

### SUMMARY OF THE INVENTION

This object is achieved by the subject matter of the independent claims. The dependent claims define preferred embodiments.

Accordingly, the present invention provides a security module for optimum memory utilization, said security module including: a dynamic storage device including a first storage area storing one or more native codes and a second storage area storing one or more Java packages/Java objects, and a processor being operationally coupled to the dynamic storage device configured to: detect presence of the one or more native codes in the first storage area, form the detected one or more native codes in the first storage area as a part of the second storage area, and manage the one or more native codes like the Java packages in the second storage area.

According the present invention, the processor in operation with the dynamic storage device, in forming the detected one or more native codes as the part of the second storage area, configured to: link addresses of the detected one or more native codes in the first storage area to the second storage area. According to yet another embodiment of the present invention, the processor in operation with the dynamic storage device, upon forming the one or more native codes as the part of the second storage area, configured to: allocate a segment in a segment allocation table for the one or more native codes.

According to yet another embodiment of the present invention, the processor in operation with the dynamic storage device, in allocating the segment in the segment allocation table, configured to: determine size of the one or more native codes which is formed as the part of the second storage area.

According to a further embodiment of the present invention, the processor in operation with the dynamic storage device, upon allocating the segment, configured to adjust the size of the second storage area based on the determined size of the one or more native codes.

According to a furthermore embodiment of the present invention, the segment allocation table includes segment number, the size and address of the one or more native codes.

According to the present invention, the processor in operation with the dynamic storage device, in managing the one or more native codes like the Java packages, configured to: designate one or more special flags to the one or more native codes, and trigger a garbage collection on the flagged one or more native codes, thereby freeing a space occupied by the flagged one or more native codes and dynamically resize the second storage area.

According to yet another embodiment of the present invention, the processor in operation with the dynamic storage device configured to designate the special flags to the one or more native codes when a life state of the one or more native codes is changed. According to a further embodiment of the present invention, the processor in operation with the dynamic storage device further configured to update the segment allocation table when the size of the second storage area is changed.

According to a furthermore embodiment of the present invention, the one or more native codes comprises codes written in a language other than Java.

According to another embodiment of the present invention, the dynamic storage device configured to support non-volatile rewritable memory and volatile rewritable memory.

According to the present invention provides a method for optimum memory utilization, said method including: detecting presence of one or more native codes in a first storage area of a dynamic storage device, forming the detected one or more native codes in the first storage area as a part of a second storage area of the dynamic storage device, and managing the native codes like Java packages in the second storage area of the dynamic storage device.

According the present invention, the forming the detected one or more native codes as the part of the second storage area includes: linking addresses of the detected one or more native codes in the first storage area to the second storage area. According to another embodiment of the present invention, the said method upon forming the one or more native codes as the part of the second storage area, including: allocating a segment in a segment allocation table for the one or more native codes. According to yet another embodiment of the present invention, the allocating the segment in the segment allocation table including: determining size of the one or more native codes which is formed as the part of the second storage area.

According to a further embodiment of the present invention, the said method upon allocating the segment including: adjusting the size of the second storage area based on the determined size of the one or more native codes.

According to a furthermore embodiment of the present invention, the segment allocation table includes segment number, the size and address of the one or more native codes.

According the present invention, the managing the native codes like the Java packages in the second storage area including: designating one or more special flags to the one or more native codes, and triggering a garbage collection on the flagged one or more native codes, thereby freeing a space occupied by the flagged one or more native codes and dynamically resizing the second storage area.

According to yet another embodiment of the present invention, the one or more special flags are designated to the one or more native codes when a life state of the one or more native codes is changed.

According to a further embodiment of the present invention, the method further includes updating the segment allocation table when the size of the second storage area is changed.

According to a furthermore embodiment of the present invention, the native codes comprises codes written in a language other than Java.

According to an aspect of the embodiment of the present invention provides a dynamic storage device for optimum memory utilization, including: a first storage area includes: a native code area for storing thereupon native codes, and a Java code area for storing thereupon Java codes, and a second storage area includes: at least one marker area for storing one or more markers to indicate start of the second storage area, wherein said at least one marker area configured to link the native code area with the second storage area, and a data area for storing thereupon plurality of Java packages, wherein, the native code area upon linking with the second storage area is configured to encroach the second storage area thereby forming the native code area as a part of the second storage area.

According to another embodiment of the present invention, the marker area is configured to link the native code area with the second storage area by modifying/updating the marker that indicate the start of the second storage area with the address of the native code area.

According to yet another embodiment of the present invention, the second storage area further configured to allocate a segment in a segment allocation table for the native code area which is formed as the part of the second storage area.

According to a further embodiment of the present invention, the second storage area, in allocating the segment in the segment allocation table, configured to: determine size of the native code area which is formed as the part of the second storage area.

According to a furthermore embodiment of the present invention, the second storage area upon allocating the segment configured to move the at least one marker area down in the data area based on the determined size of the native code area.

According to another embodiment of the present invention, the data area configured to manage the native codes like the java packages.

According to yet another embodiment of the present invention, the data area in managing the native codes like the java packages, configured to: designate special flags to the native codes; and trigger a garbage collection on the flagged native codes, thereby freeing a space occupied by the flagged native codes and dynamically resizing the second storage area.

According to a further embodiment of the present invention, the data area configured to designate the special flags to the native codes when a life state of the native codes is changed.

According to a furthermore embodiment of the present invention, the segment allocation table includes segment number, the size and address of the native code area.

According to another embodiment of the present invention, the second storage area further configured to update the segment allocation table when the size of the second storage area is changed.

According to yet another embodiment of the present invention, the one or more markers further configured to indicate end of the second storage area.

### OBJECT OF THE INVENTION

The principal object according to an embodiment of the present invention is to optimize the memory space.

Another object according to another embodiment of the present invention is to free the space of unused native codes and utilize the same.

Yet another object according to yet another embodiment of the present invention is to increase the overall size of the memory available in the security modules.

Further object according to an aspect of the embodiment of the present invention is to provide a security module for optimum memory utilization.

Furthermore object according to another aspect of the embodiment of the present invention is to provide a method of optimum memory utilization.

Furthermore object according to yet another aspect of the embodiment of the present invention is to provide a dynamic storage device for optimum memory utilization.

### BRIEF DESCRIPTION OF THE DRAWINGS

Embodiments of the invention will now be described with reference to the accompanying drawings, throughout which like parts are referred to by like references, and in which:
FIGS. 1-4 represent structures of a dynamic storage device according to one or more embodiments of the present invention.
FIG. 5 represents a flow diagram of an exemplary method according to another embodiment of the present invention
FIG. 6 represents a block diagram of an exemplary security module according to another embodiment of the present invention.

### DETAILED DESCRIPTION OF THE INVENTION

While the invention is susceptible to various modifications and alternative forms, specific embodiment thereof has been shown by way of example in the drawings and will be described in detail below. It should be understood, however that it is not intended to limit the invention to the particular forms disclosed, but on the contrary, the invention is to cover all modifications, equivalents, and alternative falling within the scope of the invention as defined by the appended claims.

The method steps have been represented where appropriate by conventional symbols in the drawings, showing only those specific details that are pertinent to understanding the embodiments of the present invention so as not to obscure the disclosure with details that will be readily apparent to those of ordinary skill in the art having benefit of the description herein.

The terms "comprises", "comprising", or any other variations thereof, are intended to cover a non-exclusive inclusion, such that a process, method that comprises a list of steps does not include only those steps but may include other steps not expressly listed or inherent to such process, method. Similarly, one or more elements in a system or apparatus proceeded by "comprises... a" does not, without more constraints, preclude the existence of other elements or additional elements in the system or apparatus.

The features of the present invention are set forth with particularity in the appended claims. The invention itself, together with further features and attended advantages, will become apparent from consideration of the following detailed description, taken in conjunction with the accompanying drawings. One or more embodiments of the present invention are now described, by way of example only, with reference to a specific example of security module system. The invention is by no means bound by this particular example.

According to an embodiment of the present invention the security module is a module reduced in size and resources comprising a central processing unit, at least one data interface for communication with the device and a storage area. This storage area might comprise secret data. The security module obtains features to prohibit manipulation and/or abuse attempts to read out the secret data. The secret data in the security module are for identification and / or authentication of a user at the device, a terminal or a network system.

The security module is for example a smart card, such as a UICC, a SIM, U-SIM, R-UIM or ISIM-card, an electronic identity document such as eID or ePassport, an electronic driver's license, electronic vehicle registration or a payment card, such as a credit or debit card.

In particular, the security module is a subscriber identity module for authentication / identification of a subscriber in a mobile radio network environment. Such subscriber identity modules are operated using a card reader units in a terminal and can be removed in principle from the terminal to be either exchanged for other smart cards or operated in a different terminal. Alternatively, the security module is an integral part within a terminal such as a hard-wired electronic module. Such security modules are also embedded as UICC, eUICC, or embedded secure element, ESE refers. In this configuration, these modules are not provided for security of supply from the terminal and can not in principle be easily replaced.

Alternatively, the security module is a machine-to-machine module. These modules are used for remote monitoring, control and maintenance of devices or equipment such as machinery, equipment and systems. Alternatively those modules are used for counting units such as electric meters, water meters, so-called smart meters.

Alternatively, the security module as a software component in a trusted part of an operating system, called a Trusted Execution Environment (TEE) of a device. The security module is then designed, for example within a secure runtime environment.

The security module is operable by means of the device. The device according to the present invention comprises means for communicating with a communication network, in order to receive the firmware update. The device might be a mobile device, like a smart phone, a tablet PC, a notebook, a PDA. Alternatively the device is a multimedia device such as digital picture frame, audio equipment, a TV, a set top box, e-book reader and so on. By way of example, the term device also includes any kind of machinery, like automats, vehicles, smart-meters and so on. The firmware update is in particular received via an air interface, such as OTA, which is an SMS based communication over cellular signalling layers or GPRS layers. Alternatively, the firmware update is received via an internet protocol based channel, such as OTI (e.g. WLAN). Alternatively, the firmware update is received via a packed switched domain, e.g. an LTE based channel

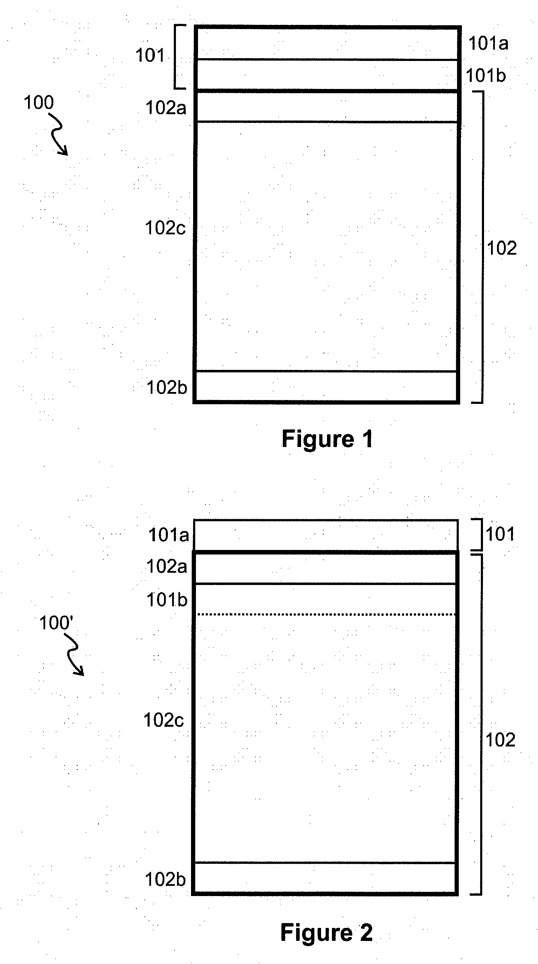

Referring now to the drawings, and in particular to FIG. 1, a structure of dynamic storage device (100) is illustrated. The dynamic storage device structure (100) includes at least one first storage area (101) and at least one second storage area (102). The first storage area (101) may further includes at least one area (101a) for storing one or more non-native codes and at least one area (101b) for storing one or more native codes. According to a non-limiting exemplary embodiment, the non-native codes are the codes which are written in a Java programming language and may also referred as Java codes. The area for storing these non-native codes may also refer as Java code area (101a). According to another non-limiting exemplary embodiment, the native codes are the codes which are written for a specific microcontroller/processor. These codes are mostly written in C programming language. The area for storing these native codes may also refer as native code area (101b). The second storage area (102) may further includes one or more marker areas (102a, 102b) for storing one or more markers and at least one data area (102c) for storing one or more Java packages/objects. According to a non-limiting exemplary embodiment, a Java package is a namespace that organizes a set of related classes and interfaces in Java and objects are a concept in object-oriented paradigm which talks about specific components that have states and behaviors. The marker areas (102a, 102b) include one or more markers to indicate start and end of the second storage area (102). The markers may indicate starting address and ending address of the second storage area (102). According to an embodiment, the markers in the marker areas (102a, 102b) may also move up of down when there is any change in size of the second storage area (102). According to a non-limiting exemplary embodiment, the first storage area (101) may referred as Java card operating system block, the second storage area (102) may referred as Java heap block, the marker areas (102a, 102b) may referred as Java heap start block and Java heap end block, and the data area (102c) may referred as free block in the Java heap block which is configured to store Java packages/objects temporarily in a runtime environment.

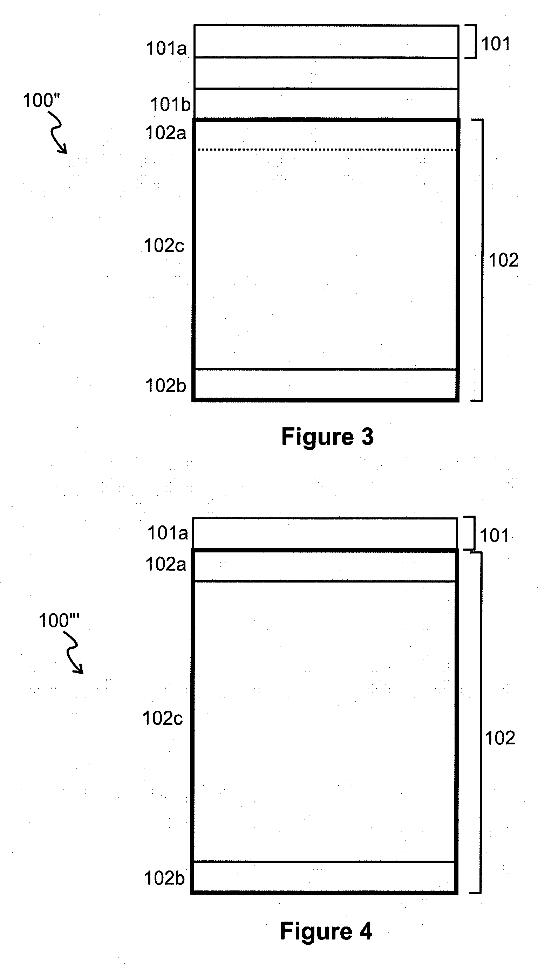

Now, referring to FIG. 2, the structure of dynamic storage device according to another embodiment is illustrated. In this embodiment, the native code area (101b) encroaches the second storage area (102) and form part of the second storage area (102). Here it is to be noted that the native codes are not allowed to move. Hence, the native code area (101b) uses markers of one of the marker areas (102a, 102b) in the encroachment process. For this encroachment, the one or more markers of the markers area (102a, 102b) are configured to link the native code area (101b) with the second storage area (102). In this linking process, the markers are configured to link the starting address of the second storage area (102) with starting address of the native code area (101b). By this process, the starting address of the native code area (101b) becomes the starting address of the second storage area (102). Accordingly, the native code area (101b) becomes part of the second storage area (102). According to another embodiment, the second storage area (102) may configured to encroach the native code area (101b) by using the above process and make the native code area (101b) as a part of the second storage area (102). It is to be noted that the native codes in the native code area (101b) should not be over-written by the codes/packages/objects in the second storage area (102). Thus, to avoid this over-writing situation, once the native code area (101b) becomes part of the second storage area (102) a segment allocation is performed at the data area (102c) of the second storage area (102). To perform this segment allocation, an allocation table may be used. This allocation table may present in a predefined position of a security module. The allocation table may includes segment number, address and size of a new segment. Once the native code area (101b) becomes part of the second storage area (102), it may be considered as a new segment in the data area (102c). Accordingly, the size and address of the native code area (101b) is determined in the segment allocation process. The size of the native code area (101b) may be determined by using markers of one of the marker areas (102a, 102b). Upon determining the size of the native code area (101b), the markers of one of the marker area (102a, 102b) may move down in the data area (102c) based on the size of the native code area (101b) thereby reducing the size of the data area (102c). This may means that the free area in the second storage area reduced to the size of the native code area. Accordingly, the details in the segment allocation table may be updated. It may avoid over-written situation to the native code area (101b). This may be illustrated in FIG 3. Now, by way of non-limiting example, the segment allocation table may be updated with a segment number as one, the address of the native code area as 0000 and the size as 1000. According to the above example, when a new Java package is loaded into a system, it will be stored in the data area below the area occupied by the native code area. Accordingly, the markers of one of the marker areas may move down thereby reducing the size of the data area further by the size of the new Java package. Now, the segment allocation table may update the above details with the addition of new segment number two, new address 1000, new size 1500. It may tell that over-written of the native codes by the Java packages should not happen in the area where the native codes are occupied. According to an embodiment, the above process may occur after a first restart of a security module which has the dynamic storage device. The first restart may be a change of life state of the security module. By way of non-limiting example, the first restart or change of life state may occur when the security module or smartcard is used for its first time operation.

Now referring to FIG.4, the dynamic memory device structure according to another embodiment is illustrated. According to this embodiment, the second storage area (102) may be configured to manage the native codes in the native code area (101b) like Java packages/codes/objects. This managing process may includes designate one or more special flags to the native codes and trigger a garbage collection on the flagged native codes in the second storage area (102). The triggering of garbage collection may be performed automatically on the flagged native codes in the second storage area (102). According to an embodiment, the native codes may also be referred as one-time codes (OTC). The native codes may become redundant once the life state of the native codes is changed or their task is served. Accordingly, the special flags may be designated to the native codes which are served their tasked and the garbage collection may be triggered on those codes, automatically, thereby removing the flagged native codes and gaining a free space in the second storage area (102). Upon deleting the native codes after their task is served, the area which is occupied by those native codes are freed. Accordingly, the size of the second storage area (102) is getting realigned. In particular, the free area in the data area (102c) getting increased, thereby markers of the one of the marker areas (102a, 102b) may be moved up as per the resize. Accordingly, the segment allocation table may be modified. In particular, entries in the segment allocation table may be cleared. The gained free space may later be used for other suitable purpose of the security module. According to another embodiment, the special flags may designated to indicate the system that the codes which are flagged are the native codes and may not served their task; hence those codes are not to be deleted by garbage collection till a particular period of time or till their task is served. According to another embodiment, the flagged native codes may also be used for reuse or any other purpose. In this scenario also the flagged native codes may not be involved for garbage collection for some period. According to an embodiment, when there is no use for the flagged native code arises, the deletion of the flagged native codes is triggered by a proprietary delete command. By way of non-limiting example, the delete command may include Delete OTC. Accordingly, the segment allocation table may be modified. In particular, entries in the segment allocation table may be cleared.

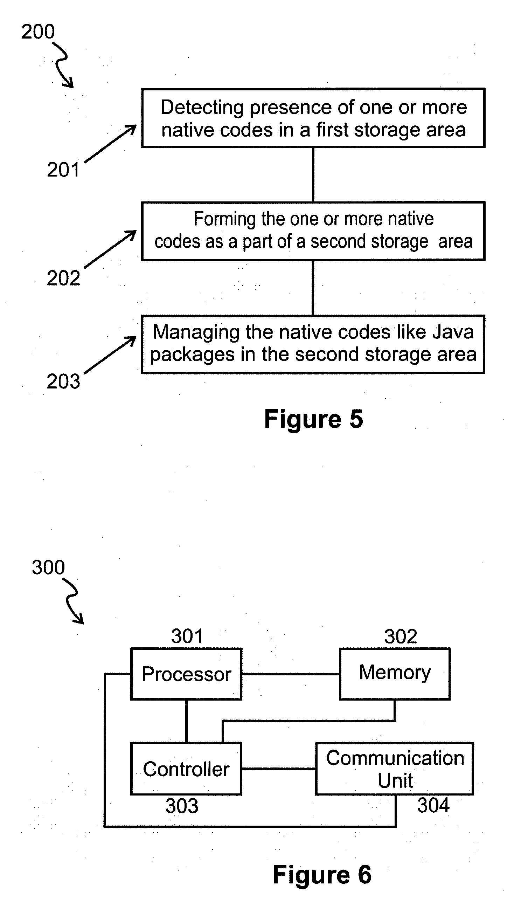

Now referring to FIG.5, a flow diagram (200) of an exemplary method according another embodiment is illustrated. This flow diagram (200) may represent a method of optimum memory utilization according to this embodiment. In one embodiment, this method may follow the same structure of the dynamic storage device (100) as described above. However, this method may not only limited to the above memory structure described, but also other memory structures which have at least two areas. Accordingly, at 201, presence of one or more native codes is detected in the first storage area (101) of the dynamic storage device (100). At 202, the detected native codes in the first storage area formed as a part of the second storage area (102). The forming the native codes as the part of the second storage area may includes linking the address of the first storage area (101) with the second storage area (102). It may imply linking the addresses of the native codes in the first storage area (101) with the second storage area (102). The linking the address of the first storage area (101) with the second storage area (102) may includes linking starting address of the second storage area (102) with the first storage area (101). This linking may form the native codes in the first storage area (101) as the part of the second storage area (102). Upon forming (202) the native codes as the part of the second storage area (102), a segment allocation for the native codes is performed in the second storage area (102). This may be performed after a first restart of the security module. The first restart may be a change of life state of the security module. The segment allocation may include determining a size of the native codes and adjusting the size of the second storage area (102) based on the determined size of the native codes. The adjusting the size of the second storage area may include decreasing or increasing the size of the second storage area (102). This segment allocation process may include a segment allocation table which may be updated according to a change in the size of the second storage area (102). The size of the second storage area may be changed when a segment has been added to or deleted from the second storage area. The segment allocation table may includes segment number, address and size of a new segment. Once the native codes become part of the second storage area (102), it may be considered as a new segment in the second storage area (102) thereby reducing the size of the second storage area (102). Accordingly, the details in the segment allocation table are updated. This allocation process may avoid a concept of over-writing the native codes by the Java packages in the second storage area. At 203, the native codes are managed like Java packages/objects in the second storage area (102). The managing (203) the native codes like Java packages includes designating special flags to the native codes and triggering a garbage collection on the flagged native codes in the second storage area (102). The triggering of garbage collection may be performed automatically on the flagged native codes. According to an embodiment, the native codes may also be referred as one-time codes (OTC). The native codes may become redundant once the life state of the native codes is changed or their task is served. Accordingly, the special flags may be designated to the native codes which are served their tasked and the garbage collection may be triggered on those codes, automatically, thereby removing the flagged native codes and gaining a free space. Upon deleting the native codes after their task is served, the area which is occupied by those native codes are freed. Accordingly, the size of the second storage area (102) is getting realigned. In particular, the free area in the second storage area (102) is getting increased. Accordingly, the segment allocation table may be modified. In particular, entries in the segment allocation table may be cleared. The gained free space may later be used for other suitable purpose of the security module. According to another embodiment, the special flags may designated to indicate the system that the codes which are flagged are the native codes and may not served their task; hence those codes are not to be deleted by garbage collection till a particular period of time or till their task is served. According to another embodiment, the flagged native codes may also be used for reuse or any other purpose. In this scenario also the flagged native codes may not be involved for garbage collection for some period. According to an embodiment, when there is no use for the flagged native code arises, the deletion of the flagged native codes is triggered by a proprietary delete command. By way of non-limiting example, the delete command may include Delete OTC. Accordingly, the segment allocation table may be modified. In particular, entries in the segment allocation table may be cleared.

Now referring to FIG.6, a block diagram of an exemplary security module (300) according to an embodiment is illustrated. According to this embodiment, the security module (300) comprises at least one processor (301), at least one memory (302) according to former explanations, at least one controller (303), and at least one communication unit (304). According to an exemplary embodiment, the security module may be a portable data carrier which may include one or more of the above components. The native and non-native codes are stored in the memory (302) and processed by the processor (301). The Controller (303) may control one or more operations of the processor (301), memory (302) and the communication unit (304). The communication unit (304) is used in communicating/accessing the security module (300) with other suitable devices. The communication unit (304) may include an interface unit in accessing/connecting the security module (300) via other devices or the above components. In one embodiment, the processor (301) may be a micro processor and the memory (302) may include a persistent memory or dynamic storage device which supports non-volatile rewritable memory (FLASH) and volatile rewritable working memory (RAM). The persistent memory may includes storage locations for Java card operating system comprising native elements; Java objects, Java virtual machine, Java heap, Java stack and Java card run time environment. Over all operating system is divided into native and Java objects. All these Java card operating system elements are statically lined and are programmed into FLASH in the form of combined binary, according one embodiment. During the operation, the above described the at least one or more components in operation with other at least one or more components configured to perform all functions/embodiments as described above. A person skilled in the art can easily recognize the various possible interconnections between the components described above to perform the described functions. By way of non limiting example, the at least one processor (301) in operation with the at least one memory (302) may configured to perform the functions/embodiments as described above. Accordingly, the components as described may be referred as special purpose components.

Those of skill would appreciate that the various illustrative logical blocks, components, modules, areas and method steps described in connection with the embodiments disclosed herein may be implemented as electronic hardware, computer software, or combinations of both. To clearly illustrate this interchangeability of hardware and software, various illustrative components, blocks, modules, areas, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, components, modules, and areas described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method described in connection with the embodiments disclosed herein may be interchanged, and not all steps need to be reached. The steps of a method described in connection with the embodiments disclosed herein may be embodied directly in hardware, in a software module executed by a processor, or in a combination of the two. A software module may reside in non-transitory memory, such as RAM memory, flash memory, ROM memory, EPROM memory, EEPROM memory, registers, hard disk, a removable disk, a CD-ROM, or any other form of storage medium known in the art, including semiconductor, optical, and/or magnetic storage mediums, including computer-readable storage mediums. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

### ADVANTAGES OF THE PRESENT INVENTION

The present invention provides following one or more non-limiting advantages:
Freeing up the space of unused native code during the runtime of a Javacard and
utilizing the gained space for Java applications; and
By utilizing the freed space for any suitable purpose, the overall memory available in the security module increases making it more cost effective.

The above description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the principles and novel features disclosed herein.

## Claims

1. A security module for optimum memory utilization, said security module comprising:
a dynamic storage device including a first storage area storing one or more native codes and a second storage area storing one or more Java packages; and
a processor being operationally coupled to the dynamic storage device configured to:
- detect presence of the one or more native codes in the first storage area;
- form the detected one or more native codes in the first storage area as a part of the second storage area, by linking addresses of the detected one or more native codes in the first storage area to the second storage area; and
- manage the one or more native codes like the Java packages in the second storage area, wherein one or more special flags are designated to the one or more native codes and a garbage collection is triggered on the flagged one or more native codes, thereby freeing a space occupied by the flagged one or more native codes and dynamically resizing the second storage area.

2. The security module as claimed in claim 1, wherein the processor in operation with the dynamic storage device, upon forming the one or more native codes as the part of the second storage area, is configured to:
allocate a segment in a segment allocation table for the one or more native codes.

3. The security module as claimed in claim 2, wherein the processor in operation with the dynamic storage device, in allocating the segment in the segment allocation table, is further configured to:
determine size of the one or more native codes which is formed as the part of the second storage area.

4. The security module as claimed in claims 2 and 3, wherein the processor in operation with the dynamic storage device, upon allocating the segment, is further configured to adjust the size of the second storage area based on the determined size of the one or more native codes.

5. The security module as claimed in claim 4, wherein the processor in operation with the dynamic storage device is configured to designate the special flags to the one or more native codes when a life state of the one or more native codes is changed.

6. The security module as claimed claims 4 and 5, wherein the processor in operation with the dynamic storage device is further configured to update the segment allocation table when the size of the second storage area is changed.

7. A method for optimum memory utilization, said method comprising:
detecting presence of one or more native codes in a first storage area of a dynamic storage device;
forming the detected one or more native codes in the first storage area as a part of a second storage area of the dynamic storage device that stores one or more Java packages, the forming comprises linking addresses of the detected one or more native codes in the first storage area to the second storage area; and
managing the native codes like Java packages in the second storage area of the dynamic storage device, wherein one or more special flags are designated to the one or more native codes and the managing comprises triggering a garbage collection on the flagged one or more native codes, thereby freeing a space occupied by the flagged one or more native codes and dynamically resizing the second storage area.

8. The method as claimed in claim 7, wherein the said method upon forming the one or more native codes as the part of the second storage area, comprising:
allocating a segment in a segment allocation table for the one or more native codes.

9. The method as claimed in claim 8, wherein the allocating the segment in the segment allocation table comprising:
determining size of the one or more native codes which is formed as the part of the second storage area.

10. The method as claimed in claims 8 and 9, wherein the said method upon allocating the segment comprising:
adjusting the size of the second storage area based on the determined size of the one or more native codes.

11. The method as claimed in claims 7 and 8, further comprising:
updating the segment allocation table when the size of the second storage area is changed.

## Patentansprüche

1. Sicherheitsmodul zur optimalen Speicherbelegung, das Sicherheitsmodul aufweisend:
eine dynamische Speichereinheit aufweisend einen ersten Speicherbereich, der ein oder mehrere native Codes abspeichert und einen zweiten Speicherbereich, der ein oder mehrere Java Packages abspeichert; und
einen Prozessor, der operational mit der dynamischen Speichereinheit gekoppelt ist, eingerichtet zum:
- Detektieren eines Vorhandenseins eines oder mehrerer nativen Codes in dem ersten Speicherbereich;
- Ausgestalten der detektierten einen oder mehreren nativen Codes in dem ersten Speicherbereich als ein Teil des zweiten Speicherbereichs, mittels Verbindens von Adressen der detektierten einen oder mehreren nativen Codes in dem ersten Speicherbereich mit dem zweiten Speicherbereich; und
- Verwalten der einen oder mehreren nativen Codes wie Java Packages in dem zweiten Speicherbereich, wobei ein oder mehrere Spezial Flags dem einen oder mehreren nativen Codes zugeordnet sind und eine Speicherbereinigung auf dem einen oder mehreren mittels Flags gekennzeichneten Codes angestoßen wird, wobei ein Freigeben von Speicherplatz, welcher durch die mittels eines Flags gekennzeichneten ein oder mehreren nativen Codes belegt ist, erfolgt und ein dynamisches Neuberechnen der Speichergröße des zweiten Speicherbereichs erfolgt.

2. Sicherheitsmodul nach Anspruch 1, wobei der Prozessor im Zusammenwirken mit der dynamischen Speichereinheit bei einem Gestalten des einen oder mehreren nativen Codes als Teil des zweiten Speicherbereichs eingerichtet ist zum:
Belegen eines Segments in einer Segmentbelegungstabelle für den einen oder die mehreren nativen Codes.

3. Sicherheitsmodul nach Anspruch 2, wobei der Prozessor im Zusammenwirken mit der dynamischen Speichereinheit bei einem Belegen des Segments in der Speicherbelegungstabelle eingerichtet ist zum:
Bestimmen der Größe des einen oder mehreren nativen Codes der als Teil des zweiten Speicherbereichs ausgestaltet ist.

4. Sicherheitsmodul gemäß Anspruch 2 und 3, wobei der Prozessor im Zusammenwirken mit der dynamischen Speichereinheit bei einem Belegen des Segments ferner eingerichtet ist zum
Anpassen der Größe des zweiten Speicherbereichs, basierend auf der bestimmten Größe des einen oder der mehreren nativen Codes.

5. Sicherheitsmodul gemäß Anspruch 4, wobei der Prozessor im Zusammenwirken mit der dynamischen Speichereinheit eingerichtet ist zum Zuweisen von Spezial-Flags an den einen oder mehrere nativen Codes, wenn ein Lebenszustand des einen oder der mehreren nativen Codes geändert wird.

6. Sicherheitsmodul gemäß Anspruch 4 und 5, wobei der Prozessor in seinem Zusammenwirken mit der dynamischen Speichereinheit weiterhin eingerichtet ist zum Aktualisieren der Segmentbelegungstabelle, wenn die Größe des zweiten Speicherbereichs geändert wird.

7. Verfahren zur optimalen Speicherbelegung, das Verfahren aufweisend:
Detektieren eines Vorhandenseins eines oder mehrerer nativen Codes in einem ersten Speicherbereich einer dynamischen Speichereinheit;
Ausgestalten des detektierten einen oder mehreren nativen Codes in dem ersten Speicherbereich als ein Teil des zweiten Speicherbereichs der dynamischen Speichereinheit, welche ein oder mehrere Java Packages abspeichert, wobei das Ausgestalten ein Verbinden von Adressen des einen oder mehreren detektierten nativen Codes in dem ersten Speicherbereich mit dem zweiten Speicherbereich umfasst; und
Verwalten der nativen Codes wie Java Packages in dem zweiten Speicherbereich der dynamischen Speichereinheit, wobei ein oder mehrere Spezial-Flags dem einen oder mehreren nativen Codes zugeordnet werden, und das Verwalten ein Auslösen einer Speicherbereinigung auf den mittels Flags gekennzeichneten einen oder mehreren nativen Codes umfasst, wobei ein Freigeben eines Speichers erfolgt, der von den mittels Flags gekennzeichneten einen oder mehreren nativen Codes belegt wird und dynamisches Neuberechnen der Speichergröße des zweiten Speicherbereichs.

8. Verfahren nach Anspruch 7, wobei das Verfahren beim Ausgestalten des einen oder mehreren nativen Codes als Teil des zweiten Speicherbereichs aufweist:
Belegen eines Segments in einer Speicherbelegungstabelle für den einen oder mehrere native Codes.

9. Verfahren nach Anspruch 8, wobei das Belegen des Segments in der Segmentbelegungstabelle umfasst:
Bestimmen der Größe von einem oder mehreren nativen Codes, welche als Teil des zweiten Speicherbereichs ausgestaltet sind.

10. Verfahren nach Anspruch 8 und 9, wobei das Verfahren beim Belegen des Segments umfasst:
Anpassen der Größe des zweiten Speicherbereichs basierend auf der bestimmten Größe des einen oder der mehreren nativen Codes.

11. Verfahren nach Anspruch 7 und 8, ferner umfassend:
Aktualisieren der Segmentbelegungstabelle, wenn die Größe des zweiten Speicherbereichs geändert wird.

## Revendications

1. Module de sécurité destiné à une utilisation de mémoire optimale, ledit module de sécurité comprenant :
un dispositif de stockage dynamique incluant une première zone de stockage stockant un ou plusieurs codes natifs et une seconde zone de stockage stockant un ou plusieurs packages Java, et
un processeur couplé pour le fonctionnement avec un dispositif de stockage dynamique configuré pour :
- détecter la présence du un ou plusieurs codes natifs dans la première zone de stockage ;
- former le un ou plusieurs codes natifs détectés dans la première zone de stockage comme partie de la seconde zone de stockage, en reliant des adresses du un ou plusieurs codes natifs détectés dans la première zone de stockage à la seconde zone de stockage, et
- gérer le un ou plusieurs codes natifs comme les packages Java dans la seconde zone de stockage, dans lequel un ou plusieurs drapeaux spéciaux sont désignés pour les un ou plusieurs codes natifs et une collecte d'informations invalides est déclenchée sur le un ou plusieurs codes natifs désignés par drapeau, libérant ainsi un espace occupé par le un ou plusieurs codes natifs désignés par drapeau et redimensionnant de manière dynamique la seconde zone de stockage.

2. Module de sécurité selon la revendication 1, dans lequel le processeur en fonctionnement avec le dispositif de stockage dynamique, suite à la formation d'un ou plusieurs codes natifs comme partie de la seconde zone de stockage est configuré pour :
attribuer un segment d'une table d'attribution de segment pour le un ou plusieurs codes natifs.

3. Module de sécurité selon la revendication 2, dans lequel le processeur en fonctionnement avec le dispositif de stockage dynamique, lors de l'attribution du segment dans la table d'attribution de segment est en outre configuré pour :
déterminer la taille du un ou plusieurs codes natifs formés comme partie de la seconde zone de stockage.

4. Module de sécurité selon l'une quelconque des revendications 2 et 3, dans lequel le processeur en fonctionnement avec le dispositif de stockage dynamique, lors de l'attribution du segment est en outre configuré pour :
adapter la taille de la seconde zone de stockage sur la base de la taille déterminée du un ou plusieurs codes natifs.

5. Module de sécurité selon la revendication 4, dans lequel le processeur en fonctionnement avec le dispositif de stockage dynamique est configuré pour désigner les drapeaux spéciaux pour les un ou plusieurs codes natifs lorsqu'un état de vie du un ou plusieurs codes natifs est modifié.

6. Module de sécurité selon l'une quelconque des revendications 4 et 5, dans lequel le processeur en fonctionnement avec le dispositif de stockage dynamique est en outre configuré pour actualiser la table d'attribution de segment lorsque la taille de la seconde zone de stockage est modifiée.

7. Procédé destiné à une utilisation de mémoire optimale, ledit procédé comprenant les étapes consistant à :
- détecter la présence de un ou plusieurs codes natifs dans une première zone de stockage d'un dispositif de stockage dynamique ;
- former le un ou plusieurs codes natifs détectés dans la première zone de stockage comme partie de la seconde zone de stockage du dispositif de stockage dynamique qui stocke un ou plusieurs packages Java, la formation comprenant la liaison d'adresses du un ou plusieurs codes natifs détectés dans la première zone de stockage avec la seconde zone de stockage, et
- gérer le un ou plusieurs codes natifs comme des packages Java dans la seconde zone de stockage du dispositif de stockage dynamique, dans lequel un ou plusieurs drapeaux spéciaux sont désignés pour les un ou plusieurs codes natifs, et la gestion comprend le déclenchement d'une collecte d'informations invalides sur le un ou plusieurs codes natifs désignés par drapeau, libérant ainsi un espace occupé par le un ou plusieurs codes natifs désignés par drapeau et redimensionnant de manière dynamique la seconde zone de stockage.

8. Procédé selon la revendication 7, dans lequel ledit procédé, lors de la formation du un ou plusieurs codes natifs comme partie de la seconde zone de stockage, comprend l'étape consistant à :
attribuer un segment d'une table d'attribution de segment pour le un ou plusieurs codes natifs.

9. Procédé selon la revendication 8, dans lequel l'attribution du segment dans la table d'attribution de segment comprend l'étape consistant à :
déterminer la taille du un ou plusieurs codes natifs formés comme partie de la seconde zone de stockage.

10. Procédé selon l'une quelconque des revendications 8 et 9, dans lequel ledit procédé, lors de l'attribution du segment, comprend l'étape consistant à :
adapter la taille de la seconde zone de stockage sur la base de la taille déterminée du un ou plusieurs codes natifs.

11. Procédé selon l'une quelconque des revendications 7 et 8, comprenant en outre l'étape consistant à :
actualiser la table d'attribution de segment lorsque la taille de la seconde zone de stockage est modifiée.
